Europäisches Patentamt

European Patent Office

Office européen des brevets

(11) Veröffentlichungsnummer: **0 170 876 B1**

(12) **EUROPÄISCHE PATENTSCHRIFT**

(45) Veröffentlichungstag der Patentschrift: 06.11.91

(51) Int. Cl.⁵: **G06F 13/24**

(21) Anmeldenummer: 85108164.6

(22) Anmeldetag: 02.07.85

(54) Schaltungsanordnung zur Steuerung der bidirektionalen Datenübertragung zwischen einer Rechnereinheit und über Ein-/Ausgabeeinheiten angeschlossenen übertragungsleitungen.

(30) Priorität: 04.07.84 DE 3424587

(43) Veröffentlichungstag der Anmeldung:
12.02.86 Patentblatt 86/07

(45) Bekanntmachung des Hinweises auf die
Patenterteilung:
06.11.91 Patentblatt 91/45

(84) Benannte Vertragsstaaten:
AT DE FR GB NL

(56) Entgegenhaltungen:
EP-A- 0 013 347
FR-A- 2 440 058
US-A- 4 378 588

IBM TECHNICAL DISCLOSURE BULLETIN,
Band 17, Nr. 1, Juni 1974, Seiten 82,83, New
York, US; D.A. GEORGE et al.: "Synchronous
microprogram service technique for fullduplex communications"

NACHRICHTENTECHNIK ELEKTRONIK, Band
31, Nr. 5, 1981, Seiten 183-189, Berlin, DD;
B.G. MÜNZER et al.: "Kopplung eines programmierbaren Interrupt-
Controller-Schaltkreises an den Mikrorechner K 1520"

(73) Patentinhaber: Standard Elektrik Lorenz Aktiengesellschaft
Lorenzstrasse 10
W-7000 Stuttgart 40(DE)

(84) Benannte Vertragsstaaten:
DE

Patentinhaber: ALCATEL N.V.
Strawinskylaan 537 (World Trade Center)
NL-1077 XX Amsterdam(NL)

(84) Benannte Vertragsstaaten:
FR GB NL AT

(72) Erfinder: Gasser, Franz
Tilgshausenstrasse 49
W-7250 Leonberg(DE)

(74) Vertreter: Villinger, Bernhard, Dipl.-Ing. et al
Standard Elektrik Lorenz AG Patent- und Lizenzwesen Postfach 30 09 29
W-7000 Stuttgart 30(DE)

## Beschreibung

Die Erfindung betrifft eine Schaltungsanordnung zur Steuerung der bidirektionalen Datenübertragung zwischen einer Rechnereinheit und über Ein-/Ausgabeeinheiten angeschlossene Übertragungsleitungen, wobei für die erste Übertragungsrichtung - Eingabeeinheit, Rechnereinheit - ein erster Zwischenspeicher und für die zweite Übertragungsrichtung - Rechnereinheit, Augabeeinheit - ein zweiter Zwischenspeicher vorgesehen ist, die einerseits über einen Adressen-/Datenbus mit der Rechnereinheit und andererseits mit der Ein- bzw. Ausgabeeinheit verbunden sind.

Zwischen Systemen mit unterschiedlichem Echtzeitverhalten, wie zum Beispiel zwischen schnell arbeitenden Rechnereinheiten und langsamen peripheren Geräten werden zur Anpassung der Arbeitsgeschwindigkeiten Zwischenspeicher verwendet. Zum Steuern der bidirektionalen Datenübertragung zwischen solchen Systemen ist bereits eine Schaltungsanordnung bekannt (EP 0 013 347) in der Schwellenwerte vorgegeben werden, die einer vorgebbaren Speicherkapazität der Zwischenspeicher entsprechen.

Diese Schaltungsanordnung hat jedoch den Nachteil, daß beim Erreichen dieser Schwellenwerte in der ersten Übertragungsrichtung - Eingabeeinheit, Rechnereinheit - die über die Übertragungsleitung ankommenden Daten solange nicht in den Zwischenspeicher aufgenommen werden können, bis durch Aktivitäten von seiten der Rechnereinheit der Zwischenspeicher soweit geleert ist, daß der Schwellenwert wieder unterschritten ist. Somit ist für diesen Zeitraum ein weiterer Zwischenspeicher notwendig, damit die ankommenden Daten nicht verloren gehen.

Weiterhin wird in der zweiten Übertragungsrichtung - Rechnereinheit, Ausgabeeinheit - beim Erreichen der Schwellenwerte das Auslessen des Zwischenspeichers veranlaßt, wobei die Rechnereinheit mit dem Einschreiben neuer Daten solange warten muß, bis der Schwellenwert in dem Zwischenspeicher unterschritten ist. Dies bedeutet, daß als sinnvolle Schwellenwerte die maximale Kapazität der Zwischenspeicher zu setzen ist, womit sich aber eine durch Schwellenwerte abhängige Steuerung erübrigt.

Die technische Aufgabe der Schaltungsanordnung nach der Erfindung besteht darin, eine Steuerung zur bidirektionalen Datenübertragung zwischen einer Rechnereinheit und über Ein-/Ausgabeeinheiten angeschlossene Übertragungsleitungen so zu realisieren, daß eine minimale Belastung der Rechnereinheit durch Unterbrechungsbearbeitungszeiten erreicht wird.

Eine erfindungsmäßige Schaltungsanordnung der eingangs genannten Art ist definiert in Anspruch 1.

Ein Vorteil der Erfindung liegt insbesondere darin, daß durch die programmierbaren Schwellenlogikeinheiten eine optimale Anpassung an den Datenfluß der Übertragungsleitungen ermöglicht wird, da die Zwischenspeicher zu jedem Zeitpunkt die von den Eingabeeinheiten ankommenden Daten einschreiben oder Daten an die Ausgabeeinheiten auslesen. Außerdem wird die Rechnereinheit durch die zwischen die programmierbaren Schwellenlogikeinheiten geschaltete Unterbrechungsanforderungslogik nur beim Erreichen der vorgegebenen Schwellenwerte in den Zwischenspeichern zum schnellen Auslesen und Einschreiben von Daten in die Zwischenspeicher unterbrochen.

Weitere vorteilhafte Ausbildungen des Gegenstandes der Erfindung sind den Unteransprüchen zu entnehmen. Ein Ausführungsbeispiel wird im folgenden anhand der Zeichnungen erläutert. Es zeigen:

Figur 1    ein Blockschaltbild für eine erfindungsgemäße Schaltungsanordnung, und

Figur 2    eine Schwellenlogikeinheit und eine Unterbrechungsanforderungslogik der erfindungsgemäßen Schaltungsanordnung nach Figur 1.

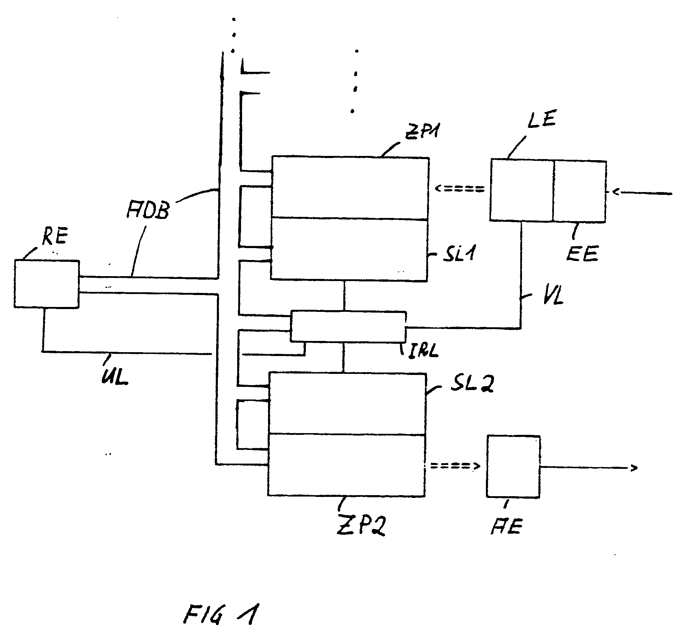

Für eine Steuerung der bidirektionalen Datenübertragung zwischen einer Rechnereinheit RE und über Ein-/Ausgabeeinheiten EE, AE angeschlossene Übertragungsleitungen ist, wie in Figur 1 gezeigt, für die erste Übertragungsrichtung - Eingabeeinheiten EE, Rechnereinheit RE - ein erster Zwischenspeicher ZP1 und für die zweite Übertragungsrichtung - Rechnereinheit RE, Ausgabeeinheit AE - ein zweiter Zwischenspeicher ZP2 vorgesehen. Dabei wird bei den Übertragungsleitungen hier von den Kanälen eines PCM 30 Systems ausgegangen, welches 32 Kanäle aufweist. Über die Übertragungsleitungen wird ein serieller Bitstrom von 4,096 MBit/sec d.h. 16 Bit/Kanal übertragen. Der serielle Bitstrom eines Kanals wird wortorientiert in den ersten Zwischenspeicher ZP1 eingeschrieben und aus dem zweiten Zwischenspeicher ZP2 ausgelesen. Zur besseren Übersicht wurde nur 1 PCM Kanal in gehender und kommender Übertragungsrichtung näher betrachtet, da alle anderen Kanäle entsprechend gesteuert werden.

Die Zwischenspeicher ZP1, ZP2 sind einerseits über einen Adressen-/Datenbus ADB mit der Rechnereinheit RE ud andererseits über die Ein-/Ausgabeeinheiten EE, AE an die PCM-Leitungen angeschlossen.

Von einem PCM Kanal eines PCM 30 Systems wird in jedem Rahmen, d.h. alle 125 μsec ein Datenwort übertragen. Dabei wird in der ersten Übertragungsrichtung ein ausgeblendetes 16 Bit Datenwort in der Eingabeeinheit EE aufgenommen, die oberen 8 Bit abgetrennt sowie die unteren 8 Nutzbits in den ersten Zwischenspeicher ZP1 eingeschrieben.

Ebenso verläßt in der zweiten Übertragungsrichtung alle 125 μsec ein Datenwort den zweiten Zwischenspeicher ZP2. Dabei werden in einer hier nicht näher gezeigten Formatisierungslogik zunächst die oberen 8 Bit zwischengespeichert und beim Beschreiten der unteren 8 Bit das so entstandene 16 Bit Datenwort in den zweiten Zwischenspeicher ZP2 eingeschrieben und über die Ausgabeeinheit AE in einen Kanal des PCM 30 System eingeblendet. Für die Zwischenspeicher ZP1, ZP2 wird von einer Kapazität von 12 Datenworten ausgegangen.

Eine erste und eine zweite programmierbare Schwellenlogikeinheit SL1, SL2 ist an den ersten bzw. zweiten Zwischenspeicher ZP1, ZP2 angeschlossen, sowie über den Adressen-/Datenbus ADB mit der Rechnereinheit RE verbunden. Zwischen die erste und zweite programmierbare Schwellenlogikeinheit SL1, SL2 ist eine Unterbrechungsanforderungslogik IRL geschaltet, die über den Adressen-/Datenbus ADB sowie eine Unterbrechungsanforderungsleitung UL mit der Rechnereinheit RE in Verbindung steht.

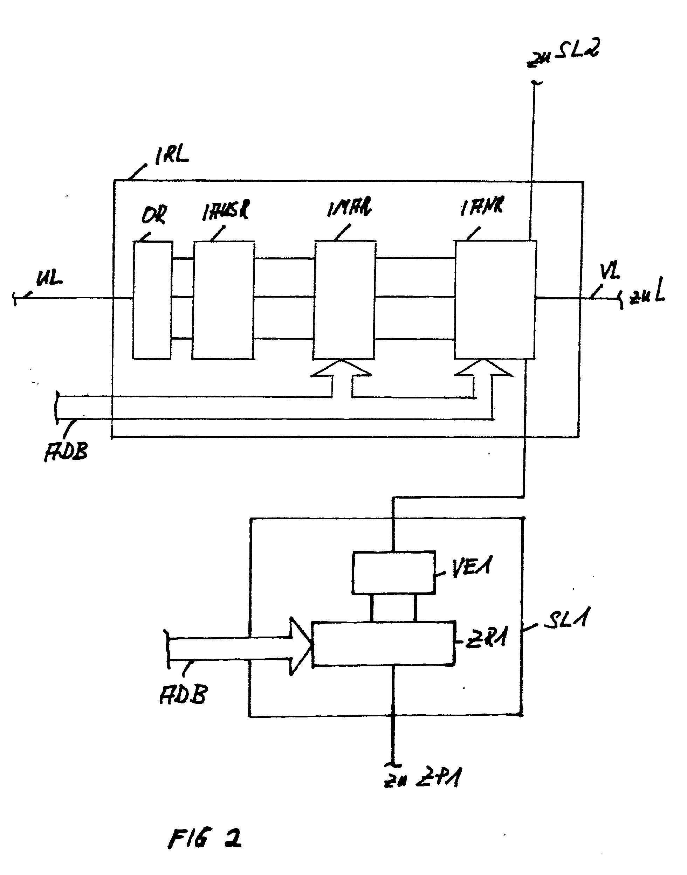

Da alle programmierbaren Schwellenlogikeinheiten SL1, SL2 prinzipiell gleich aufgebaut sind, wird in Figur 2 nur die erste programmierbare Schwellenlogikeinheit SL1 gezeigt. Sie enthält eine erste Zähler-Registereinheit ZR1, die mit dem ersten Zwischenspeicher ZP1, über den Adressen-/Datenbus ADB mit der Rechnereinheit RE und mit einer ersten Vergleichseinheit VE1 verbunden ist.

Die Unterbrechungsanforderungslogik IRL weist, wie aus Figur 2 ersichtlich, ein Unterbrechungsmaskierungsregister IMAR, ein Unterbrechungsausführungsregister IAUSR und ein Unterbrechungsanforderungsregister IANR auf. Das Unterbrechungsanforderungsregister IANR ist mit den Vergleichseinheiten VE1, VE2, mit dem Unterbrechungsmaskierungsregister IMAR und über den Adressen-/Datenbus ADB mit der

Rechnereinheit RE verbunden. Ferner ist das Unterbrechungsmaskierungsregister IMAR an das Unterbrechungsausführungsregister IAUSR und über den Adressen-/Datenbus ADB an die Rechnereinheit RE geführt. Das Unterbrechungsausführungsregister IAUSR ist an eine logische ODER-Schalteinheit OR angeschlossen und über die Unterbrechungsanforderungsleitung UL mit der Rechnereinheit RE verbunden.

Die Rechnereinheit RE gibt nun über den Adressen-/Datenbus ADB der ersten und zweiten programmierbaren Schwellenlogikeinheit SL1, SL2 Schwellenwerte vor, die einer Anzahl im ersten Zwischenspeicher ZP1 durch eingeschriebene Datenworte besetzter Speicherplätze und im zweiten Zwischenspeicher ZP2 durch das Auslesen der Datenworte freigewordener Speicherplätze, im folgenden Leerplätze genannt, entsprechen. Diese Schwellenwerte werden in der ersten bzw. einer zweiten Zähler-Registereinheit ZR1, ZR2 abgespeichert. Dabei wird im folgenden für die erste programmierbare Schwellenlogikeinheit SL1 von einem Schwellenwert 9, d.h. 9 Datenworte eingeschrieben und für die zweite programmierbare Schwellenlogikeinheit SL2 von einem Schwellenwert 8, d.h. 8 Leerplätzen, ausgegangen.

Die erste und zweite Zählerregistereinheit ZR1, ZR2 zählen wieviele Datenworte in den jeweiligen Zwischenspeicher ZP1, ZP2 eingeschrieben und ausgelesen worden sind. Somit enthalten die Zählerregistereinheiten ZR1, ZR2 einerseits die vorgegebenen Schwellenwerte und andererseits die Anzahl der zu jedem Zeitpunkt eingeschriebenen Datenworte des ersten Zwischenspeichers ZP1 bzw. die entsprechende Anzahl der Leerplätze des zweiten Zwischenspeichers ZP2. Die erste und eine zweite Vergleichseinheit VE1, VE2 vergleichen nun die abgespeicherten Schwellenwerte mit dem Inhalt der die Anzahl der eingeschriebenen Datenworte bzw. Leerplätze enthaltenden Register. Solange die Registerinhalte gleich oder großer als der entsprechende Schwellenwert sind, wird ein Signal an das Unterbrechungsanforderungsregister IANR der Unterbrechungsanforderungslogik IRL abgegeben.

Die Unterbrechungsregister IANR, IAUSR, IMAR der Unterbrechungsanforderungslogik IRL weisen für alle ersten Zwischenspeicher ZP1 ein gemeinsames Bit, für alle zweiten Zwischenspeicher ZP2 ein gemeinsames Bit und für eine mögliche Übertragung von Daten in Paketform (wird später noch beschrieben) ein weiteres gemeinsames Bit auf.

Enthält das System mehr als zwei Zwischenspeicher ZP1, ZP2 so werden zur Auffindung der ein Signal aussendenden Vergleichseinheit VE1, VE2 die folgenden nicht näher dargestellten Register benötigt.

Ein erstes Unterbrechungs-Identifizierungsregister, das pro erstem Zwischenspeicher ZP1 ein Bit aufweist, welches durch die zugehörige Vergleichseinheit VE1 beim Erreichen des Schwellenwertes auf logisch "1" gesetzt wird. Ein entsprechendes zweites Unterbrechungs-Identifizierungsregister für die zweiten Zwischenspeicher ZP2 und ein entsprechendes drittes Unterbrechungs-Identifizierungsregister für eine jedem ersten Zwischenspeicher ZP1 zugeordnete (wird später beschrieben) Logikeinheit LE.

Durch ein z.B. von der ersten Vergleichseinheit VE1 abgegebenes Signal an das Unterbrechungsanforderungsregister IANR wird dort das für den ersten Zwischenspeicher ZP1 vorgesehene Bit auf einen Logischen "1"-Pegel gesetzt. Entsprechend der in dem Unterbrechungsmaskierungsregister IMAR vorliegenden Maske, die über den Adressen-/Datenbus ADB von der Steuereinheit SE aufgelegt wird, wird nun das von dem Unterbrechungsanforderungsregister IANR vorliegende "1"-Pegelsignal zum Unterbrechungsausführungsregister IAUSR durchgeschaltet oder gesperrt. Jeder logische "1"-Pegel im Unterbrechungsausführungsregister IAUSR wird durch die ODER-Schalteinheit OR als Unterbrechungssignal über die Unterbrechungsanforderungsleitung UL zur Rechnereinheit RE gemeldet.

Die Rechnereinheit RE registriert das Unterbrechungssignal, beendet seine gerade laufende Arbeit und legt über den Adressen-/Datenbus ADB im Unterbrechungsmaskierungsregister IMAR eine neue Maske auf, so daß keine weiteren von der Rechnereinheit RE ungewollten Unterbrechungssignale an die Rechnereinheit RE durchgeschaltet werden können. Jetzt liest die Rechnereinheit RE über den Adressen-/Datenbus ADB den Inhalt des Unterbrechungsanforderungsregister IANR aus, wodurch sie mitgeteilt bekommt, daß die Schwelle im ersten Zwischenspeicher ZP1 erreicht wurde.

Wird von einem System mit mehreren Zwischenspeichern ZP1, ZP2 ausgegangen, so erhält die Rechnereinheit RE durch den Inhalt des Unterbrechungsanforderungsregisters IANR zunächst die Information, ob ein Schwellenwert in einem ersten oder einem zweiten Zwischenspeicher ZP1, ZP2 erreicht wurde. Sodann greift die Rechnereinheit RE auf das erste Unterbrechungs-Identifizierungsregister oder auf das zweite Unterbrechungs-Identifizierungsregister zu, wodurch die Rechnereinheit RE erkennt, welchen Zwischenspeicher ZP1, ZP2 sie zu bedienen hat.

Unter der Annahme, daß die beiden vorgegebenen Schwellenwerte im ersten und im zweiten Zwischenspeicher ZP1, ZP2 gleichzeitig erreicht werden, wird entsprechend der Bearbeitungspriorität, die im Programm der Rechnereinheit RE vorgebbar ist, vorgegangen.

Im vorliegenden Fall legt nun die Rechnereinheit RE über den Adressen-/Datenbus ADB die Adresse der ersten Zähler-Registereinheit ZR1 an und der Inhalt des Register, der inzwischen 10 sei, wird ausgelesen und in der Rechnereinheit RE abgespeichert. Aufgrund dieses Registerinhaltes liest nun die Rechnereinheit RE über den Adressen-/Datenbus ADB 10 Datenwörter aus dem ersten Zwischenspeicher ZP1 aus und speichert sie zur weiteren Verarbeitung ab. Dadurch wird der Inhalt des Registers der ersten Zähler-Registereinheit ZR1 entsprechend dekrementiert. Sobald die erste Vergleichseinheit VE1 erkennt, daß der vorgegebene Schwellenwert unterschritten wurde, wird auch das Signal an das Unterbrechungsanforderungsregister IANR aufgehoben und das entsprechende Bit im Unterbrechungsanforderungsregister IANR auf den logischen "0"-Pegel gesetzt.

Falls inzwischen ein weiteres Unterbrechungssignal nach geänderter Maske, da der vorliegende Vorgang durch die Rechnereinheit RE abgeschlossen war, aufgrund des Erreichens des Schwellenwertes des zweiten Zwischenspeichers ZP2 der Rechnereinheit RE vorliegt, wiederholt sich analog zum vorher beschriebenen Vorgang der gleiche Ablauf. Die Rechnereinheit RE liest dabei den Inhalt der zweiten Zähler-Registereinheit ZR2, der inzwischen 11 sei, aus und speichert ihn ab. Nun überträgt die Rechnereinheit RE 11 Datenwörter zum zweiten Zwischenspeicher ZP2. Dabei wird die zweite Zähler-Registereinheit ZR2 dekrementiert und das zugehörige Bit im Unterbrechungsanforderungsregister IANR nach Unterschreiten des Schwellenwertes auf den "0"-Pegel gesetzt. Die Rechnereinheit RE kann nun wieder solange andere Aufgaben bearbeiten, bis erneut die für die Zwischenspeicher ZP1, ZP2 vorgegebenen Schwellenwerte überschritten werden.

Durch die von der Rechnereinheit RE vorgebbaren Schwellenwerte, d.h. das Programmieren der Schwellenlogikeinheiten SL1, SL2, wird eine optimale Anpassung der verschiedenen Geschwindigkeiten der Signale der jeweils angeschlossenen Übertragungsleitungen und der jeweils benutzten Rechnereinheit RE ermöglicht. Dabei können durch die vorgebbaren Schwellenwerte die Geschwindigkeit der Rechnereinheit RE zum Auslesen und Einschreiben eines Datenwortes in einen Zwischenspeicher ZP1, ZP2, die verschiedenen Prioritäten eines Unterbrechungssignals sowie besondere Gegebenheiten der Zwischenspeicher ZP1, ZP2 mühelos berücksichtigt werden. Dies hat eine minimale Belastung der Rechnereinheit RE durch Unterbrechungsbearbeitungszeiten zur Folge. Sollte während des Betriebes eine Verkehrslaständerung von seiten der Übertragungsleitungen auftreten, kann die Rechnereinheit RE durch das Abändern der Schwellenwerte auch solche Betriebsfälle entsprechend leicht steuern.

Für den Fall, daß die von den PCM-Leitungen kommenden Daten in Paketform gesendet werden, ist gemäß der Erfindung zwischen jede Eingabeeinheit EE und jedem ersten Zwischenspeicher ZP1 eine Logikeinheit LE geschaltet, die je über eine Verbindungsleitung VL mit dem Unterbrechungsanforderungsregister IANR verbunden ist. Die Logikeinheit LE decodiert das Ende-Wort einer Nachricht und beschreibt über die Verbindungsleitung VL ein zugehöriges Bit im Unterbrechungsanforderungsregister IANR. Bei einem System mit mehreren ersten Zwischenspeichern ZP1, sind die Logikeinheiten LE mit dem dritten Unterbrechungs-Identifizierungsregister verbunden. Somit wird der Rechnereinheit RE bei entsprechender Maske im Unterbrechungsmaskierungsregister IMAR über das Unterbrechungsausfünrungsregister IAUSR ein Unterbrechungssignal gesendet, wenn das Ende einer Nachricht im ersten Zwischenspeicher ZP1 eingeschrieben ist. Anderenfalls würde das Ende einer Nachricht solange im ersten Zwischenspeicher ZP1 stehen bleiben, bis eine nachfolgende Nachricht den ersten Zwischenspeicher ZP1 bis zum vorgegebenen Schwellenwert aufgefüllt hätte.

**Patentansprüche**

1. Schaltungsanordnung zur Steuerung der bidirektionalen Datenübertragung zwischen einer Rechnereinheit (RE) und über Ein-/Ausgabeeinheiten (EE, AE) angeschlossenen Übertragungsleitungen durch Überwachung des Füllungsgrades von Zwischenspeichern, **dadurch gekennzeichnet ,** daß für die erste Übertragungsrichtung - Eingabeeinheit (EE), Rechnereinheit (RE) - ein erster Zwischenspeicher (ZP1) und für die zweite Übertragungssrichtung - Rechnereinheit (RE), Ausgabeeinheit (AE) - ein zweiter Zwischenspeicher (ZP2) vorgesehen sind, die einerseits über einen Adressen-/Datenbus (ADB) mit der Rechnereinheit (RE) und andererseits mit der Ein- bzw. Ausgabeeinheit (EE, AE) verbunden sind, daß eine erste programmierbare Schwellenlogikeinheit (SL1) an den ersten Zwischenspeicher (ZP1) angeschlossen ist, daß eine zweite programmierbare Schwellenlogikeinheit (SL2) an den zweiten Zwischenspeicher (UP2) angeschlossen ist, daß die erste und die zweite programmierbare Schwellenlogikeinheit (SL1, SL2) über den Adressen-/Datenbus (ADB) mit der Rechnereinheit (RE) verbunden sind, daß eine Unterbrechungsanforderungslogik (IRL) zwischen die erste und die zweite programmierbare Schwellenlogikeinheit (SL1, SL2) geschaltet und über den Adressen-/Datenbus (ADB) sowie eine Unterbrechungsanforderungsleitung (UL) an die Rechnereinheit (RE) geführt ist und daß die erste und die zweite programmierbare Schwellenlogikeinheit (SL1, SL2) einerseits durch die Rechnereinheit (RE) vorgebbare Schwellenwerte speichern und andererseits die Anzahl der in die Zwischenspeicher (ZP1, ZP2) eingeschriebenen bzw. ausgelesenen Datenworte zählen und beim Erreichen der vorgegebenen Schwellenwerte ein Signal über die Unterbrechungsanforderungslogik (IRL) und die Unterbrechungsanforderungsleitung (UL) an die Rechnereinheit (RE) senden.

2. Schaltungsanordnung nach Ansprch 1, dadurch gekennzeichnet, daß die erste und die zweite programmierbare Schwellenlogikeinheit (SL1, SL2) eine erste bzw. zweite Zähler-Registereinheit (ZR1, ZR2) enthalten, die mit dem ersten bzw. zweiten Zwischenspeicher (ZP1, ZP2) sowie über den Adressen-/Datenbus (ADB) mit der Rechnereinheit (RE) und über eine erste bzw. zweite Vergleichseinheit (VE1, VE2) mit der Unterbrechungsanforderungslogik (IRL) verbunden sind.

3. Schaltungsanordnung nach Anspruch 1 oder 2, dadurch gekennzeichnet, daß die Unterbrechungsanforderungslogik (IRL) ein Unterbrechungsanforderungsregister (IANR), ein Unterbrechungsmaskierungsregister (IMAR) und ein Unterbrechungsausführungsregister (IAUSR) aufweist, daß das Unterbrechungsanforderungsregister (IANR) mit den Vergleichseinheiten (VE1, VE2), mit dem Unterbrechungsmaskierungsregister (IMAR) und über den Adressen-/Datenbus (ADB) mit der Rechnereinheit (RE) verbunden ist, daß das Unterbrechungsmaskierungsregister(IMAR) weiterhin an das Unterbrechungsausführungsregister (IAUSR) und über den Adressen-/Datenbus (ADB) an die Rechnereinheit (RE) geführt ist und daß das Unterbrechungsausführungsregister (IAUSR) an eine logische ODER-Schalteinheit (OR) angeschlossen ist, welche über die Unterbrechungsanforderungsleitung (UL) mit der Rechnereinheit (RE) in Verbindung steht.

4. Schaltungsanordnung nach einem der vorhergehenden Ansprüche, dadurch gekennzeichnet, daß eine Logikeinheit (LE), die zwischen jede Eingabeeinheit (EE) und jeden ersten Zwischenspeicher (ZP1) geschaltet ist, über je eine Verbindungsleitung (VL) mit dem Unterbrechungsanforderungsregister (IANR) verbunden ist, wodurch beim Übertragen von Daten in Paketform von seiten der Übertragungsleitungen ein Ende-Datenwort einer Nachricht in der Logikeinheit (LE) decodiert und von der Logikeinheit (LE) über die Verbindungsleitung (VL) ein Bit in dem Unterbrechungsanforderungsregister (IANR) gesetzt/gelöscht wird.

**Claims**

1. Circuit arrangement for controlling bidirectional data transfer between a computer unit (RE) and transmission lines connected via input/output units (EE, AE) by monitoring the occupancy levels of buffers, **characterized in** that a first buffer (ZP1) is provided for the first direction of transfer - input unit (EE), computer unit (RE) - and a second buffer (ZP2) is provided for the second direction of transfer - computer unit (RE), output unit (AE) said buffers (ZP1, ZP2) being connected, on the one hand, to the computer unit (RE) via an address/data bus (ADB) and, on the other hand, to the input unit (EE) and the output unit (AE), respectively, that a first programmable threshold logic unit (SL1) is attached to the first buffer (ZP1), that a second programmable threshold logic unit (SL2) is attached to the second buffer (ZP2), that the first and second programmable threshold logic units (SL1, SL2) are connected via the address/data bus (ADB) to the computer unit (RE), that an interrupt request logic (IRL) is provided between the first and second programmable threshold logic units (SL1, SL2) and connected via the address/data bus (ADB) and an interrupt request line (UL) to the computer unit (RE), and that the first and second programmable threshold logic units (SL1, SL2), on the one hand, store threshold values presettable by the computer unit (RE) and, on the other hand, count the number of data words written into the first buffer (ZP1) and read from the second buffer (ZP2), respectively, and, when the preset threshold values are reached, send a signal via the interrupt request logic (IRL) and the interrupt request line (UL) to the computer unit (RE).

2. A circuit arrangement as claimed in claim 1, characterized in that the first and second programmable threshold logic units (SL1, SL2) contain a first counter-register unit (ZR1) and a second counter-register unit (ZR2), respectively, which are connected to the first and second buffers (ZP1, ZP2), respectively, to the computer unit (RE) via the address/data bus (ADB)-,and to the interrupt request logic (IRL) via a first comparing unit (VE1) and a second comparing unit (VE2), respectively.

3. A circuit arrangement as claimed in claim 1 or 2, characterized in that the interrupt request logic (IRL) includes an interrupt request register (IANR), an interrupt mask register (IMAR), and an interrupt execution register (IAUSR), that the interrupt request register (IANR) is connected to the comparing units (VE1, VE2), to the interrupt mask register (IMAR), and via the address/data bus (ADB), to the computer unit (RE), that the interrupt mask register (IMAR) is also connected to the interrupt execution register (IAUSR) and, via the address/data bus (ADB), to the computer unit (RE), and that the interrupt execution register (IAUSR) is connected to a logic OR unit (OR) coupled to the computer unit (RE) via the interrupt request line (UL).

4. A circuit arrangement as claimed in any one of the preceding claims, characterized in that a logic unit (LE) provided between each input unit (EE) and each first buffer (ZP1) is connected via a connecting line (VL) to the interrupt request register (IANR), so that, if data is transmitted over the transmission lines in packet form, an end data word of a message is decoded in the logic unit (LE) and a bit in the interrupt request register (IANR) is set on/off by the logic unit (LE) via the connecting line (VL).

**Revendications**

1. Circuit pour commander la transmission bidirectionnelle de données entre une unité de calcul (RE) et des lignes de transmission via des unités d'entrée/sortie (EE, AE) par surveillance du niveau de remplissage de moyens de mémoire intermédiaire, caractérisé en ce qu'il est équipé d'un premier moyen de mémoire intermédiaire (ZP1) pour un premier sens de transmission entre l'unité d'entrée (EE) et l'unité de calcul (RE), et d'un deuxième moyen de mémoire intermédiaire (ZP2) pour un deuxième sens de transmission entre l'unité de calcul (RE) et l'unité sortie (AE), les moyens de mémoire intermédiaire étant raccordés d'une part à l'unité de calcul (RE) via un bus d'adresses et de données (ADB) et d'autre part à une unité d'entrée et respectivement de sortie (EE, AE), en ce qu'une première unité logique programmable à seuil (SL1) est raccordée au premier moyen de mémoire intermédiaire ( ZP1), en ce qu'une deuxième unité logique programmable à seuil (SL2) est raccordée au deuxième moyen de mémoire intermédiaire (ZP2), en ce que la première et la deuxième unités logiques programmables à seuil (SL1, SL2) sont raccordées à l'unité de calcul (RE) via le bus d'adresses et de données (ADB), en ce qu'une logique de demande d'interruption (IRL) est connectée entre la première et la deuxième unités logiques programmables à seuil (SL1, SL2), et via le bus d'adresses et de données (ADB) et une ligne de demande d'interruption (UL) à l'unité de calcul (RE), et en ce que la première et la deuxième unités logiques programmables à seuil (SL1, SL2) d'une part mémorisent des valeurs de seuil déterminables à l'avance par l'unité de calcul (RE) et, d'autre part, comptent le nombre de mots de données respectivement enregistrés et lus dans les moyens de mémoire intermédiaire (ZP1, ZP2) et émettent un signal via la logique de demande d'interruption (IRL) et la ligne de demande d'interruption (UL) à l'unité de calcul (RE) quand les seuils prédéterminés sont atteints.

2. Circuit selon la revendication 1 caractérisé en ce que la première et la deuxième unités logiques programmables à seuil (SL1, SL2) comportent respectivement une première et une deuxième unités à registre de comptage (ZR1, ZR2) qui sont raccordées respectivement au premier et au deuxième moyen de mémoire intermédiaire (ZP1, ZP2) ainsi qu'à travers le bus d'adresses et de données (ADB) à l'unité de calcul (RE), et sont raccordées à la logique de demande d'interruption (IRL) via respectivement, une première et une deuxième unités de comparaison (VE1, VE2).

3. Circuit selon la revendication 1 ou 2, caractérisé en ce que la logique de demande d'interruption (IRL) comporte un registre de demande d'interruption (IANR), un registre de masquage d'interruption (IMAR) et un registre d'exécution d'interruption (IAUSR), en ce que le registre de demande d'interruption (IANR) est raccordé aux unités de comparaison (VE1, VE2), au registre de masquage d'interruption (IMAR) et, via le bus d'adresses et de données (ADB), à l'unité de calcul (RE), en ce que le registre de masquage d'interruption (IMAR) est également connecté au registre d'exécution d'interruption (IAUSR) et, via le bus d'adresses et de données (ADB), à l'unité de calcul (RE), et en ce que le registre d'exécution d'interruption (IAUSR) est raccordé à un élément logique OU (OR), qui est raccordé via la ligne de demande d'interruption (UL) à l'unité de calcul (RE).

4. Circuit selon l'une quelconque des revendications précédentes, caractérisé en ce qu'une unité logique (LE) qui est raccordée entre chaque unité d'entrée (EE) et chaque premier moyen de mémoire intermédiaire (ZP1), est raccordée au registre de demande d'interruption (IANR) via un nombre de lignes correspondantes (VL), de telle manière que, pendant le transfert de données en forme de paquets du côté des lignes de transmission, un mot terminal de données d'une information soit décodé dans l'unité logique (LE) et, qu'à partir de l'unité logique (LE) et via la ligne de transmission (VL), un élément binaire soit positionné/remis à zéro dans le registre de demande d'interruption (IANR).

FIG 1

FIG 2